Europäisches Patentamt

European Patent Office

Office européen des brevets

(19)

(11) Publication number: **0 060 313**
**B1**

(12) **EUROPEAN PATENT SPECIFICATION**

(45) Date of publication of patent specification: **25.07.84**

(51) Int. Cl.³: **F 23 J 1/02, B 01 F 3/12**

(21) Application number: **81101977.7**

(22) Date of filing: **17.03.81**

(54) **A method of preparing a suspension of fly ashes in water and a system of devices for production and pipe transport of this suspension.**

(43) Date of publication of application:
**22.09.82 Bulletin 82/38**

(45) Publication of the grant of the patent:
**25.07.84 Bulletin 84/30**

(84) Designated Contracting States:
**AT BE CH DE FR GB IT LI LU NL SE**

(56) References cited:
AT - B - 75 362
AT - B - 88 362
DE - C - 270 808
DE - C - 492 346
DE - C - 521 193
DE - C - 539 892
GB - A - 2 046 109

(73) Proprietor: **Zaklady Energetyczne Okregu Poludniowego**
**ul Jordana 25**
**Katowice (PL)**

(72) Inventor: **Kopczynski, Janusz**
**ul. Uniwersytecka 21/130**
**Katowice (PL)**
Inventor: **Guziorski, Jerzy**
**ul. Wolskiego 9**
**Gliwice (PL)**
Inventor: **Kmiecik, Jerzy**
**ul. Chrobrego 13/21**
**Katowice (PL)**
Inventor: **Kowalski, Wiktor**
**ul. Liebknechta 9b**
**Katowice (PL)**
Inventor: **Rokita, Jerzy**
**ul. Kosciuszki 1/5**
**Gliwice (PL)**
Inventor: **Rychlicki, Wieslaw**
**ul. Uniwersytecka 29/127**
**Katowice (PL)**
Inventor: **Szubra, Jan**
**ul. Broniewskiego 15/5**
**Katowice (PL)**

Courier Press, Leamington Spa, England.

**0 060 313**

(72) Inventor: **Slusarczyk, Stanislaw**
**ul. Kussocinskiego 1/18**
**Jaworzno (PL)**
Inventor: **Tomaszewski, Slawomir**
**ul. Uniwersytecka 29/32**
**Katowice (PL)**
Inventor: **Wilgusiewicz, Wladyslaw**
**ul. Swierczewskiego 67**
**Zabrze (PL)**

(74) Representative: **Hansen, Bernd, Dr.rer.nat. et al,**
**Hoffmann, Eitle & Partner Patentanwälte**
**Arabellastrasse 4**
**D-8000 München 81 (DE)**

## Description

The subject of the invention is a method of preparing a suspension of fly ashes in water, those fly ashes being produced in the process of combustion of hard or brown coal, and a system of devices for production and pipe transport of this suspension to the point of its collecting or storage.

The presently known and applied method of hydraulic off-taking of fly ashes from a power plant to storage yards consists in that dry ashes characterized by a considerable hydrophobia are directed from under dust-extraction devices to flushing apparatuses of various types to which water is supplied at a proportion by weight being about a dozen times higher than the mass of ashes. A dilute mixture of fly ashes and water with a possible addition of granulated slag is further taken off through channels to intermediate tanks of appropriate capacity, wherefrom it is drawn by dredging pumps and transported through pipelines under pressure to open storage yards of a large area. After initial sedimentation of ashes over-sediment water is drained via a system of overflow pumps to settling tanks wherefrom — after further clarification — it is turned back to the power plant by means of a separate installation of return-water pumps and pipelines.

This idea of hydraulic pipe transport of ash has been known for several dozen years and has been described in technical literature (e.g. in the book by L. I. Kiercelli and W. J. Ryzkin "Tieplowyje elektriczeskije stancji" GEI, Moscow-Leningrad 1949, or in the monography by Bures V., Busa K., Mlynek J., Policky K. L. Hydraulicke odpopelnovani SNTL, Prague 1964). Within recent years this idea has not been changed, only particular elements of the system of devices have been improved.

A disadvantage of the presently applied system of hydraulic transport of ashes is a large intensity by volume of the flow of the mixture, which is caused by the necessity to introduce into the system water at the amount which is several dozen times greater than the amount of ash, in consideration of a considerable hydrophobia of fly ashes and a difficulty in their natural mixing with water. This causes a necessity of applying pumps and pipelines of large dimensions, requires an introduction of a return-water installation, and causes a large consumption of electric energy and high losses of water.

The object of the invention is to design a method of producing from dry fly ashes characterized by a considerable hydrophobia a suspension in water of a high concentration of ashes, as well as a system enabling production and transportation of such a suspension to the place of its collection or storage.

The essence of the system of devices according to the invention consists in that a set of devices: an ash storage reservoir, an ash feeder, an ash weight feeder, water feeder, a mixer, and a suspension tank are connected in a gravitation train with a pump and via said pump and a pressure pipeline of the suspension with the place of collection or storage of the suspension. In the aforesaid mixer at least two agitators are applied in a form of shafts having horizontal axes with several blade-rings mounted on them alternately, said agitators spinning in opposite directions in each cycle of producing the suspension from a weighed batch of ashes. Said mixer is also provided with an inlet for ashes which is situated over one agitator and with an inlet for water situated over the other agitator. In the above mentioned suspension tank compressed air is introduced to the suspension through air nozzles located on the bottom of the tank, due to which homogeneity of the suspension is maintained by barbotage.

The essence of the method of preparing a suspension according to the invention consists in preparing a suspension of dry fly ashes in batches, in periodically repeated cycles. In the course of each cycle dry ashes taken off from under dust-extracting units are proportioned by weight into the mixer together with a measured amount of water, according to a required concentration of dry fly ashes to water $>1:3$ by weight, and preferably from $1:1$ to $3:1$. Then dry fly ashes are dynamically mixed with water for a period of 2 to 4 minutes. During mixing in the mixer, in the first phase the stream of water, at a speed of at least 2 m/sec given to it by the blades of one agitator spinning horizontally, collides with a stream of ashes of a speed of at least 2 m/sec given to it by the blades of the other agitator spinning in the opposite direction, and penetrates it. A mixture of ashes and water thus obtained is separated into two streams at each revolution of the agitators, and said streams run against each other and after the end of the mixing process they form a slow-settling suspension of fly ashes in water of the rheological properties similar to the properties of the liquid.

The process of mixing of a determined amount of ashes and water in repeated cycles creates a possibility of producing a homogeneous suspension in the whole volume and renders it possible to obtain batches of a suspension of always the same concentration of ashes and provides for a control of the process.

The method and the system according to the invention eliminates the disadvantages of the hitherto applied methods of hydraulic transport of ashes.

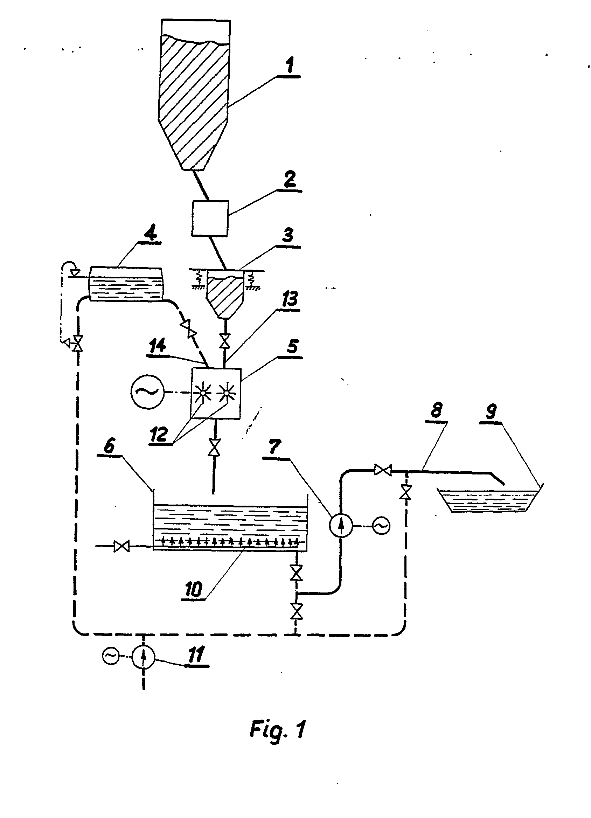

The example of the system of devices for production and pipe transport of the suspension is presented schematically in the attached fig. 1.

The installation for production and pipe transport of a suspension of fly ashes consists of an ash storage reservoir 1, an ash feeder 2, an ash weigh-feeder 3, a water feeder 4, a mixer 5 and a suspension tank 6, which are connected in a gravitation train with a pump 7, and via said pump and a suspension pressure pipeline 8, with the place of collection or storage of the suspension 9.

The mixer 5 is provided with two agitators 12 in a form of shafts having horizontal axes provided with blade-rings mounted on them alternatively, and with an ash inlet 13, situated over one agitator and a water inlet 14 situated over the other agitator. The suspension tank 6 is provided with air nozzles 10 located on its bottom.

Preparation of a suspension of fly ashes and their transport in this example is carried out in the following way. Dry fly ashes from under dust-extracting units are transported to the ash storage reservoir 1, wherefrom they are fed via the ash feeder 2 to the ash weigh-feeder 3, and then through the ash inlet 13 in the mixer 5 — to said mixer 5. Then, through the water inlet 14 water is fed to the mixer 5. Both dry fly ashes and water are introduced into the mixer 5 in batches at the weight ratio of, for example 2:1, i.e. ashes at the amount of 2 tons and water at an amount of 1 ton. Each batch of ashes and water is dynamically mixed for a period of, for example 3 minutes during which, in the first phase the stream of water at a speed of 2 m/sec, given to it by the blades of one horizontally spinning agitator, collides with the stream of ashes of a speed of 2 m/sec, given to it by the blades of the other agitator, spinning in the opposite direction, and penetrates it. At each revolution of the agitators 12 the mixture of ashes and water thus obtained is separated into two streams which run against each other and after the end of the mixing process they form a slow-settling suspension of fly ashes in water of the rheological properties similar to the properties of the liquid. The suspension prepared in this manner flows down by gravitation to the suspension tank 6. Into the suspension being in the tank 6 compressed air is forced through air nozzles 10 under a pressure of, for example 0.6 MPa in order to maintain the homogeneity of the suspension by means of barbotage.

From the tank 6 the suspension is drawn by the pump 7 and pressed through the pressure pipeline 8 to the suspension storage yard 9.

The advantages of the solution according to the invention are as follows:
— a reduction of the by-volume intensity of the flow of the mixture of dry fly ashes with water, which causes a reduction of the dimensions and of the number of pumps and pipelines,
— a reduction of the consumption of electric energy,
— an elimination of return-water installation,
— a limitation of losses and consumption of water.

The invention can be applied in power plants, thermal-electric power stations and heating plants, in which — as a result of a combustion

of hard or brown coal — dry fly ashes are produced.

## Claims

1. A method of preparing a supension of fly ashes characterized by a considerable hydrophobia in water at a high concentration of ashes, characterized in that the suspension is prepared in batches in periodically repeated cycles and during each cycle dry fly ashes taken off from under dust-extracting units are proportioned by weight into a mixer (5) together with a measured amount of water according to the required concentration of ashes to water > than 1:3 at a weight ratio, preferably from 1:1 to 3:1, and then are dynamically mixed for a period of 2 to 4 minutes during which in the mixer (5) in the first phase a stream of water at a speed of at least 2 m/sec given to it by the blades of one spinning agitator of a horizontal axis collides with a stream of ashes of a speed of at least 2 m/sec given to it by the blades of the other agitator spinning in the opposite direction, having a horizontal axis and penetrates it, and then at each revolution of the agitators (12) the mixture of ashes and water thus obtained is separated into two streams which run against each other and after the end of the mixing process they form a slow-settling suspension of fly ashes in water.

2. A system of devices for production and pipe transport of a suspension of dry fly ashes in water at a considerable concentration of ashes, characterized in that the set of devices: an ash storage reservoir (1), an ash feeder (2), an ash weigh feeder (3), a water feeder (4), a mixer (5) and a suspension tank (6) are connected in a gravitation train with a pump (7) and via said pump and a suspension pressure pipeline (8) with the place of collection or storage of the suspension (9), whereby in the mixer (5) at least two agitators of horizontal axes (12) are applied in a form of shafts with several blade-rings mounted on them alternatively, said agitators spinning in the opposite directions during each cycle of producing the suspension of a weighted batch of ashes, and said mixer (5) is provided with an ash inlet (13) situated over one agitator and with a water inlet (14) situated over the other agitator, and into the suspension tank (6) compressed air is introduced into the suspension through air nozzles (10) placed on the bottom of the tank.

## Revendications.

1. Procédé de préparation d'une suspension de cendres volantes caractérisé par un caractère hydrophobe considérable dans l'eau, à une concentration élevée de cendres, caractérisé en ce que la suspension est préparée par lots pendant des cycles répétés périodiquement et, pendant chaque cycle, les cendres volantes sèches prélevées sous les ensembles d'extraction de poussière sont mélangées en proportion pondérale dans un mélangeur (5) avec une quantité mesurée d'eau avec la concentration nécessaire de cendres par rapport à l'eau qui dépasse 1/3 en rapport pondéral et qui est de préférence comprise entre 1/1 et 3/1, les cendres et l'eau étant mélangées dynamiquement pendant une période de 2 à 4 min pendant laquelle, dans le mélangeur (5), au cours de la première phase, un courant d'eau à une vitesse au moins égale à 2 m/s qui lui est donnée par les ailettes d'un premier agitateur tournant avec un axe horizontal, vient heurter un courant de cendres ayant une vitesse au moins égale à 2 m/s qui lui est donnée par les ailettes de l'autre agitateur tournant en sens opposés, ayant un axe horizontal, et le pénètre, puis, à chaque tour des agitateurs (12) le mélange des cendres et de l'eau ainsi obtenu est séparé en deux courants qui viennent se heurter et, après la fin du processus de mélange, il forme une suspension de cendres volantes dans l'eau qui se dépose lentement.

2. Ensemble de dispositifs destiné à la production et au transport par canalisation d'une suspension de cendres volantes sèches dans l'eau à une concentration considérable des cendres, caractérisé en ce que le jeu de dispositifs comprenant un réservoir de stockage de cendres (1), un dispositif d'alimentation en cendres (2), un dispositif d'alimentation par pesée en cendres (3), un dispositif d'alimentation en eau (4), un mélangeur (5) et un réservoir de suspension (6) sont raccordés dans un train foncionnant par gravité, avec une pompe (7) et, par l'intermédiaire de la pompe et d'une canalisation (8) de suspension sous pression, avec l'emplacement de collecte ou de stockage de la suspension (9), et, dans le mélangeur (5), deux agitateurs au moins ayant des axes horizontaux (12) sont disposés sous forme d'arbres ayant plusieurs bagues munies d'ailettes montées en alternance sur les arbres, les agitateurs tournant en sens opposés dans chaque cycle de production de la suspension d'un lot pesé de cendres, et le mélangeur (5) a une entrée (13) de cendres placée au-dessus d'un premier agitateur et une entrée (14) d'eau placée au-dessus de l'autre agitateur et de l'air comprimé est introduit dans la suspension qui se trouve dans le réservoir (6) de suspension par des buses (10) d'air placées au fond du réservoir.

**Patentansprüche**

1. Verfahren zum Herstellen einer Suspension von Flugasche gekennzeichnet durch eine beträchtliche Hydrophobie in Wasser bei hoher Aschekonzentration, dadurch gekennzeichnet, daß die Suspension chargenweise in sich periodish wiederholenden Zyklen hergestellt wird, und daß während eines jeden Zyklus trockene Flugasche, die unterhalb von Staubabscheidungsvorrichtungen entnommen wird, portionsweise nach dem Gewicht einem Mischbehälter (5) zusammen mit einer bestimmten Menge Wasser, entsprechend der erforderlichen Konzentration von Asche zu Wasser > 1:3 im Gewichtsverhältnis, vorzugsweise von 1:1 bis 3:1, zugegeben und dann dynamisch für eine Zeitdauer von 2 bis 4 Minuten gemischt werden, wobei währenddessen im Mischbehälter (5) in der ersten Phase ein Wasserstrom mit einer Geschwindigkeit von mindestens 2 m/sec, die dieser von den Flügeln eines routierenden Rührwerks mit einer horizontalen Achse erhält, mit einem Aschestrom mit einer Geschwindigkeit von mindestens 2 m/sec, die dieser von den Flügeln des anderen Rührwerks mit einer horizontalen Achse, wobei das Rührwerk in entgegengesetzter Richtung rotiert, erhält, kollidiert und denselben durchringt, und dann bei jeder Drehung der Rührwerke (12) das auf diese Weise erhaltene Gemisch aus Asche und Wasser in zwei Ströme aufgeteilt wird, die im Gegenstrom zueinander sind, und diese nach Beendigung des Mischprozesses eine sich langsam absetzende Suspension von Flugasche in Wasser bilden.

2. System von Vorrichtungen zum Herstellen und zum Rohrtransport einer Suspension von trockener Flugasche in Wasser mit einer beträchtlichen Aschekonzentration, dadurch gekennzeichnet, daß die Vorrichtungen: Aschelagerreservoir (1), Aschezuführvorrichtung (2), Aschewägezuführvorrichtung (3), Wasserzuführvorrichtung (4), Mischerbehälter (5) und Suspensionsbehälter (6), in einem Gravitationszug mit einer Pumpe (7) und über die genannte Pumpe und eine Suspensions-Druckleitung (8) mit dem Stammel- oder Lagerplatz der Suspension (9) verbunden sind, wobei in dem Mischerbehälter (5) mindestens zwei Rührwerke mit horizontalen Achsen (12) in Form von Schäften mit mehreren Flügelringen, die abwechseln an denselben angebracht sind, vorgesehen sind, und die genannten Rührwerke in einander entgegengesetzten Richtungen während eines jeden Zyklus der Suspensionsherstellung einer abgewogenen Charge von Asche rotieren, und der genannte Mischerbehälter (5) mit einem Ascheeinlaß (13), der sich über einem Rührwerk befindet, und mit einem Wassereinlaß (14), der sich über dem anderen Rührwerk befindet, ausgestattet ist, und in den Suspensionsbehälter (6) Druckluft über Luftdüsen (10), die sich am Boden des Behälters befinden, in die Suspension eingeführt wird.

Fig. 1